# EUROPEAN PATENT APPLICATION

(11) **EP 2 461 204 A1**
(43) Date of publication of application: **06.06.2012**
(21) Application number: 10811558.5
(22) Date of filing: 08.04.2010
(51) Int. Cl.: G02F 1/1333

(54) **LIQUID CRYSTAL DISPLAY MODULE**

(30) Priority: 25.08.2009 JP 2009194485
(71) Applicant: Sharp Kabushiki Kaisha, Osaka-shi, Osaka 545-8522 (JP)
(72) Inventor: YOKONUMA, Shinsuke, Osaka-shi Osaka 545-8522 (JP); MINOURA, Kazunori, Osaka-shi Osaka 545-8522 (JP)
(74) Representative: Müller-Boré & Partner Patentanwälte
(86) International application number: PCT/JP2010/056391
(87) International publication number: WO 2011/024505

(57) **Abstract**

A liquid crystal display module (1) includes a liquid crystal display panel (2) to which a voltage whose polarity is changed in a predetermined cycle for display driving is applied, and an optical sheet (14). A conductive member (18) is disposed between the liquid crystal display panel (2) and the optical sheet (14). The conductive member (18) is connected to a grounding portion. Therefore, even if a voltage whose polarity is reversed is applied to a common electrode of the liquid crystal display panel (2), the effect of an electric field variation on the optical sheet can be reduced.

## Description

### Technical Field

The present invention relates to a liquid crystal display module that includes a conductive member provided between a liquid crystal display panel and an optical sheet.

### Background Art

In the field of liquid crystal display devices, there has been progress in the technology for reducing the thickness of the whole device. However, new problems such as vibration and noise are arising as the thickness of the whole device becomes thinner. Such vibration and noise are caused when a voltage whose polarity is reversed in a predetermined cycle for display driving is applied to a common electrode constituting a liquid crystal display panel.

For example, a liquid crystal display module of a liquid crystal display device generally includes at least a liquid crystal display panel, an optical sheet, and a backlight. The liquid crystal display panel includes a front polarizing plate located on a display surface side, a liquid crystal substrate portion, and a back polarizing plate located on the opposite side to the display surface side. The liquid crystal substrate portion includes a glass substrate, a common electrode, an alignment film, a liquid crystal layer, a color filter, etc.

This liquid crystal display module is driven by alternating driving (Vcom) such as line inversion driving or dot inversion driving to prevent image burn-in. Therefore, an alternating voltage is applied to the common electrode.

The optical sheet of the liquid crystal display module can build up static electricity. If the potential of the common electrode to which the alternating voltage is applied varies periodically while static electricity is built up on the optical sheet, an electric field generated between the electrostatically charged optical sheet and the common electrode also varies periodically Accordingly, the optical sheet located in the vicinity of the common electrode is subjected to an external force that changes periodically.

In other words, when a voltage whose polarity is reversed is applied to the common electrode, an electric field variation occurs around the common electrode and affects the static electricity charged on the optical sheet located in the vicinity of the common electrode. Consequently, a Coulomb force is generated in accordance with the electric field variation and vibrates the optical sheet, thereby making noise.

The noise is generated regardless of the driving system. Particularly in the case of the line inversion driving system, since the frequency of a sound to be generated is within the audible range of human hearing, the noise made by the liquid crystal display device using the line inversion driving system is likely to be unpleasant to the user's ear.

To reduce vibration and noise, a liquid crystal display device has been known, in which a transparent conductive sheet is provided between a diffusion sheet and a light guide plate of a backlight, and a signal (compensation signal) obtained by reversing a driving signal that is applied to a common electrode is applied to the transparent conductive sheet (see, e.g., Patent Document 1). In this liquid crystal display device, an electric field formed by the signal applied to the common electrode is substantially canceled by the compensation signal applied to the transparent conductive sheet. Thus, the vibration of the diffusion sheet is suppressed, which also may reduce the noise generation.

Moreover, a technology for removing static electricity generated on a panel has been known, in which a conductive sheet is attached to the panel along its three sides, and static electricity is dissipated via the conductive sheet (see, e.g., Patent Document 2).

### Prior Art Documents

### Patent Documents

Patent Document 1: JP 2004-184885 A
Patent Document 2: JP 11(1999)-185991 A

### Disclosure of Invention

### Problem to be Solved by the Invention

However, when the signal obtained by reversing the driving signal is applied to the transparent conductive sheet in order to prevent a vibration sound caused by static electricity during display driving of the liquid crystal display panel, a special circuit for generating the reverse signal is needed. In this case, the device configuration becomes complicated, and the cost is increased.

Moreover, when static electricity is removed via the conductive sheet or the like attached to the panel along its three sides, static electricity of the optical sheet cannot be completely removed because the optical sheet is located away from the conductive sheet or the like. Therefore, the static electricity that is present in the central portion of the panel and is located away from the conductive sheet cannot be removed, and vibration or the like of the central portion of the panel easily occurs due to the effect of the electric field variation, resulting in a reduction in the visibility of the panel.

With the foregoing in mind, it is an object of the present invention to provide a liquid crystal display module that has a simple device configuration and is less susceptible to the effect of an electric field variation.

### Means for Solving Problem

To achieve the above object, a liquid crystal display module as will be disclosed in the following includes a liquid crystal display panel to which a voltage whose polarity is changed in a predetermined cycle for display driving is applied, and an optical sheet. A conductive member is disposed between the liquid crystal display panel and the optical sheet, and connected to a grounding portion.

In the above liquid crystal display module, the conductive member connected to the grounding portion is disposed between the liquid crystal display panel and the optical sheet. This configuration allows the electric charge induced by the optical sheet to be canceled by the electric charge of the conductive member. Therefore, even if a voltage whose polarity is reversed is applied to a common electrode of the liquid crystal display panel, the effect of an electric field variation on the optical sheet can be reduced.

### Effects of the Invention

As described above, the liquid crystal display module of the present invention has the effects of achieving a simple device configuration and being less susceptible to the effect of an electric field variation.

### Brief Description of Drawings

[FIG. 1] FIG. 1 shows an example of a general view of a liquid crystal display module of the present invention.
[FIG. 2] FIG. 2 shows an example of a cross-sectional view of a liquid crystal display module of the present invention.
[FIG. 3] FIG. 3 shows an example of a functional block diagram of a liquid crystal display module of the present invention.
[FIG. 4] FIG. 4 shows an example of an enlarged cross-sectional view of a liquid crystal display module of the present invention.
[FIG. 5] FIG. 5 shows an example of a configuration diagram of a liquid crystal display module of the present invention.

### Description of the Invention

(1) A liquid crystal display module of an embodiment of the present invention includes a liquid crystal display panel to which a voltage whose polarity is changed in a predetermined cycle for display driving is applied, and an optical sheet. A conductive member is disposed between the liquid crystal display panel and the optical sheet, and connected to a grounding portion. With this configuration, even if a voltage whose polarity is reversed is applied to a common electrode of the liquid crystal display panel, the effect of an electric field variation on the optical sheet can be reduced.

(2) In the above liquid crystal display module, the conductive member and the optical sheet may be placed with a gap therebetween. This configuration also allows the electric charge induced by the optical sheet to be canceled by the electric charge of the conductive member. Therefore, it is possible to reduce structural interference between the optical sheet and the conductive member due to a Coulomb force. Thus, the generation of a sound can be suppressed.

(3) In the above liquid crystal display module, the liquid crystal display panel may include a front polarizing plate located on a display surface side and a back polarizing plate located on the opposite side to the display surface side, and the conductive member may be formed in contact with the back polarizing plate. This configuration can suppress static electricity generated between the back polarizing plate and the conductive member.

(4) In the above liquid crystal display module, the conductive member and the back polarizing plate may be bonded via an adhesive layer. This configuration can reduce the amount of static electricity of the whole liquid crystal display module, and thus can reduce the cause of vibration.

(5) In the above liquid crystal display module, the optical sheet may be formed by laminating a plurality of optical sheets with different properties. This configuration can reduce the effect of static electricity generated on the surface of the optical sheet located in the vicinity of the conductive material.

Hereinafter, preferred embodiments of a display device of the present invention will be described with reference to the drawings.

### [1. Embodiment 1]

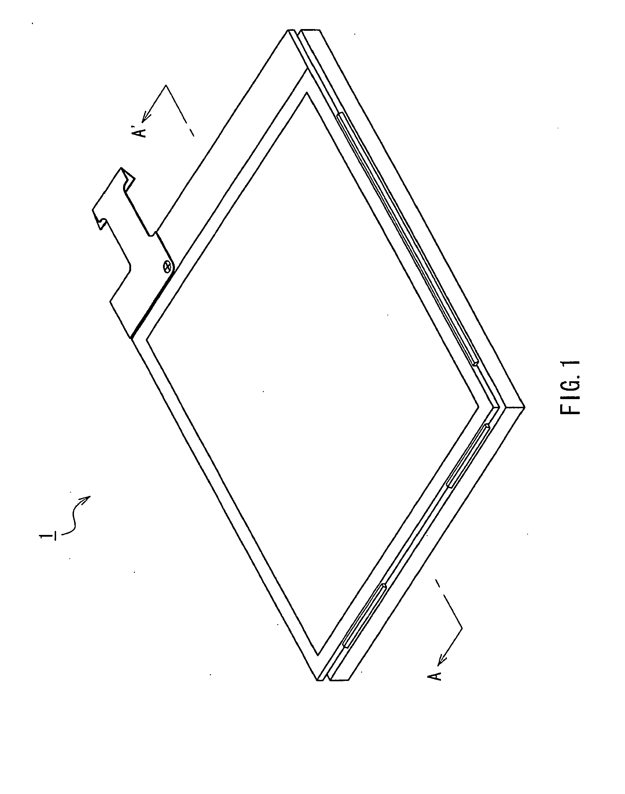

FIG. 1 is an example of a general view schematically showing a liquid crystal display module 1 of this embodiment. The liquid crystal display module 1 is used by being incorporated into a liquid crystal display device such as a portable telephone or a PDA.

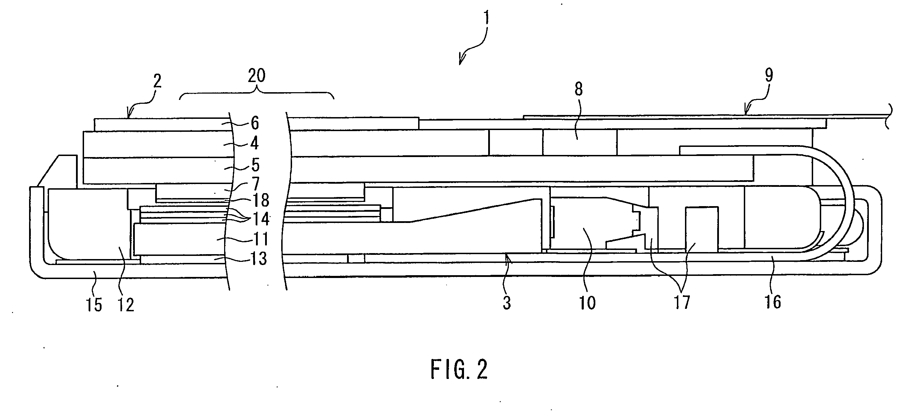

FIG. 2 is an example of a cross-sectional view of the liquid crystal display module 1 taken along the line A-A' in FIG. 1. As shown in FIG. 2, the liquid crystal display module 1 includes at least a liquid crystal display panel 2 and a backlight device 3. The surface of the liquid crystal display panel 2 when viewed from the top of FIG. 2 serves as a display surface. The backlight device 3 irradiates the liquid crystal display panel 2 with illumination light from the opposite side of the display surface.

The liquid crystal display panel 2 includes a counter substrate 4 and an active matrix substrate 5 that are a pair of transparent substrates sandwiching a liquid crystal layer, and a front polarizing plate 6 and a back polarizing plate 7 that are provided on the outer surfaces of the transparent substrates, respectively. The liquid crystal display panel 2 also includes a driver 8 connected to a FPC (flexible printed circuit) 9 so that the liquid crystal layer can be driven pixel by pixel.

For example, a plurality of pixels (not shown) are arranged in a matrix in a region of the active matrix substrate 5 that corresponds to a display region. Each of the pixels includes an active element such as TFT and a pixel electrode. Source lines (not shown) are disposed between each of the columns of pixels, and gate lines (not shown) are disposed between each of the rows of pixels. The counter substrate includes a common electrode (not shown), a color filter (not shown), etc.

In the liquid crystal display panel 2, the liquid crystal layer modulates the state of polarization of the illumination light that has entered via the back polarizing plate 7, and also controls the amount of light passing through the front polarizing plate 6. Thus, a desired image can be displayed on the display surface.

On the other hand, a transparent conductive sheet 18 (which is an example of a conductive member) is formed on the lower side of the liquid crystal display panel 2. The transparent conductive sheet 18 is grounded by an earth portion (not shown). For example, the earth portion is set to a voltage level of 0 (zero) V The transparent conductive sheet 18 or the earth portion may be connected to a terminal that supplies a predetermined DC potential. For example, the transparent conductive sheet 18 may be connected to a DC potential output terminal of the driver. That is, the transparent conductive sheet 18 may be connected to a predetermined grounding portion.

The backlight device 3 includes a cold-cathode tube 10 as a light source, a light guide plate 11 into which light of the cold-cathode tube 10 is introduced, and a backlight driver 17 for controlling the cold-cathode tube 10. The backlight device 3 is connected to the liquid crystal display panel 2 via wiring 16. An LED may be used instead of the cold-cathode tube 10. The light guide plate 11 is made of a synthetic resin such as a transparent acrylic resin. Moreover, the light guide plate 11 has a rectangular cross section, and appropriately emits light toward the liquid crystal display panel 2 while directing the incident light from the cold-cathode tube 10 in the light guide direction.

In the backlight device 3, a reflecting sheet 13 is provided on the side of the light guide plate 11 that faces away from the liquid crystal display panel 2 (i.e., the counter surface side). Moreover, a plurality of optical sheets 14 such as a lens sheet and a diffusion sheet are provided on the side of the light guide plate 11 that faces the liquid crystal display panel 2 (i.e., the light emitting surface side). The optical sheets 14 convert the light that has been emitted from the cold-cathode tube 10 and directed in the light guide plate 11 in the predetermined light guide direction (from the right to the left of FIG. 2) into planar illumination light having a uniform brightness, and supply the planar illumination light to the liquid crystal display panel 2.

In the backlight device 3, the cold-cathode tube 10, the light guide plate 11, the reflecting sheet 13, and the optical sheets 14 are held by a bezel 12, while the liquid crystal display panel 2 is located above the light guide plate 11. A case 15 is provided outside the bezel 12 so as to cover the bezel 12, the light guide plate 11, the cold-cathode tube 10, and the backlight driver 17. With this configuration, the backlight device 3 and the liquid crystal display panel 2 are assembled and integrated into the transmission-type liquid crystal display module 1, in which the illumination light from the backlight device 3 enters the liquid crystal display panel 2.

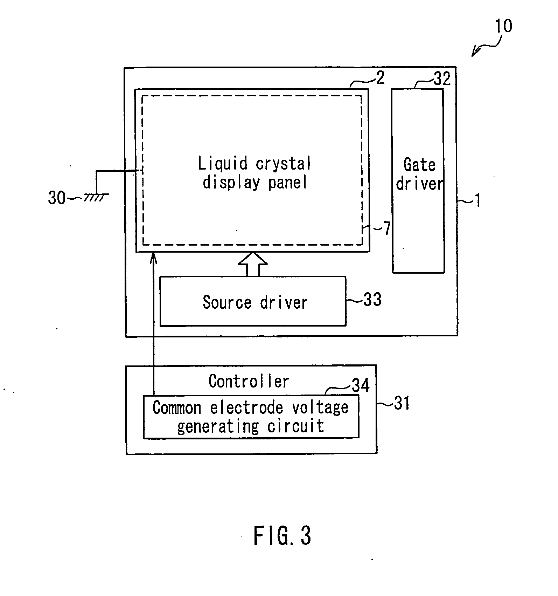

FIG. 3 is an example of a functional block diagram schematically showing a liquid crystal display device 10 that incorporates the liquid crystal display module 1. As shown in FIG. 3, the liquid crystal display device 10 of this embodiment includes the liquid crystal display panel 2 and a controller 31.

The driver 8 of the liquid crystal display module 1 includes a gate driver 32 and a source driver 33. The gate driver 32 selects a gate line to which a signal voltage is applied. The source driver 33 converts the input video signal into a voltage that is to be applied to the liquid crystal, and then applies this voltage to the pixels connected to the selected gate line.

The controller 31 includes a common electrode voltage generating circuit 34. The common electrode voltage generating circuit 34 generates a common electrode voltage (Vcom) in which the polarity of the voltage level is reversed, and then applies the common electrode voltage (Vcom) to the common electrode of the liquid crystal display panel 2.

The above components on the active matrix substrate 5 may be monolithically formed on the glass substrate by a semiconductor process. Alternatively, the drivers of the components may be mounted on the glass substrate, e.g., by a COG (chip on glass) technology. Further, at least some of the components on the active matrix substrate 5 may be mounted on the FPC 9.

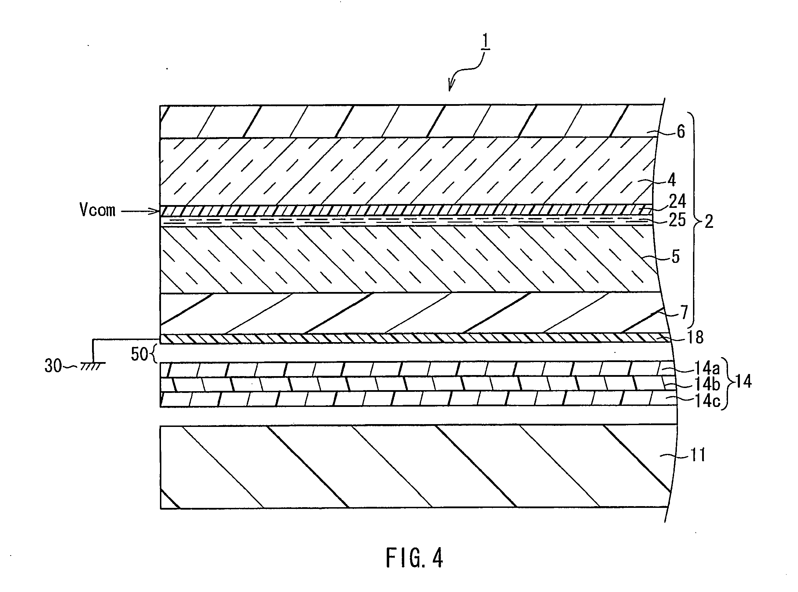

FIG. 4 is an enlarged view of a portion near the position 20 indicated in the cross-sectional view of the liquid crystal display module 1 of FIG. 2. As described above, the liquid crystal display module 1 of this embodiment includes the liquid crystal display panel 2, the transparent conductive sheet 18, the optical sheets 14 (14a, 14b, and 14c), and the light guide plate 11. The liquid crystal display panel 2 includes the front polarizing plate 6, the counter substrate 4, a common electrode 24, a liquid crystal portion 25 composed of an alignment film and a liquid crystal material, the active matrix substrate 5, and the back polarizing plate 7.

The common electrode voltage generating circuit 34 applies the common electrode voltage (Vcom) in which the polarity of the voltage level is reversed to the common electrode 24. In this case, when the common electrode voltage (Vcom) is applied to the common electrode, an electric field generated around the common electrode also varies periodically.

The transparent conductive sheet 18 is located above the optical sheets 14 with a predetermined gap 50 between them. Moreover, the transparent conductive sheet 18 is formed in contact with the back polarizing plate 7 of the liquid crystal display panel 2 and connected to an earth portion 30. Therefore, even if static electricity is generated on the surface of the optical sheets 14, the static electricity can be dissipated via the transparent conductive sheet 18 into the earth portion 30.

Thus, even if the voltage whose polarity is reversed is applied to the common electrode and causes an electric field variation around the common electrode, it is possible to reduce the static electricity on the optical sheets 14 that is to be affected by the electric field variation. Consequently, the above configuration can suppress structural interference such that a Coulomb force generated in accordance with the electric field variation vibrates the optical sheets or the like.

In particular, as shown in FIG. 4, a plurality of optical sheets (14a, 14b, and 14c) with different properties are laminated in the liquid crystal display module 1. For example, the properties of the optical sheets such as a lens sheet and a diffusion sheet may be selected based on the individual properties of the backlight and the liquid crystal display module 1.

In FIG. 4, the effect of the static electricity generated on the surface of the optical sheet 14a that faces the transparent conductive sheet 18 can be reduced. If the device including the liquid crystal display module falls or vibrates, static electricity can be generated, e.g., by friction between the optical sheets 14a, 14b, and 14c.

However, a Coulomb force of the static electricity generated, e.g., by friction between the optical sheets 14a, 14b, and 14c can be canceled by the transparent conductive sheet 18, and the predetermined gap 50 between the transparent conductive sheet 18 and the optical sheets 14 serves to reduce the Coulomb force, so that the degree of movement of the optical sheets 14 can be reduced. For at least these reasons, it is possible to suppress the generation of a sound due to the structural interference between the optical sheets 14 and the transparent conductive sheet 18.

As described above, the use of the liquid crystal display module 1 of this embodiment in the liquid crystal display device 10 can reduce the effect of static electricity present between the transparent conductive sheet 18 and the optical sheets 14. Thus, even if the voltage (Vcom) whose polarity is reversed is applied to the common electrode 24 of the liquid crystal display panel 2, the effect of the electric field variation on the optical sheets 14 can be reduced.

The liquid crystal display module 1 of the present invention can have the effects of achieving a simple device configuration and being less susceptible to the effect of the electric field variation.

### [1-2. Modified example 1]

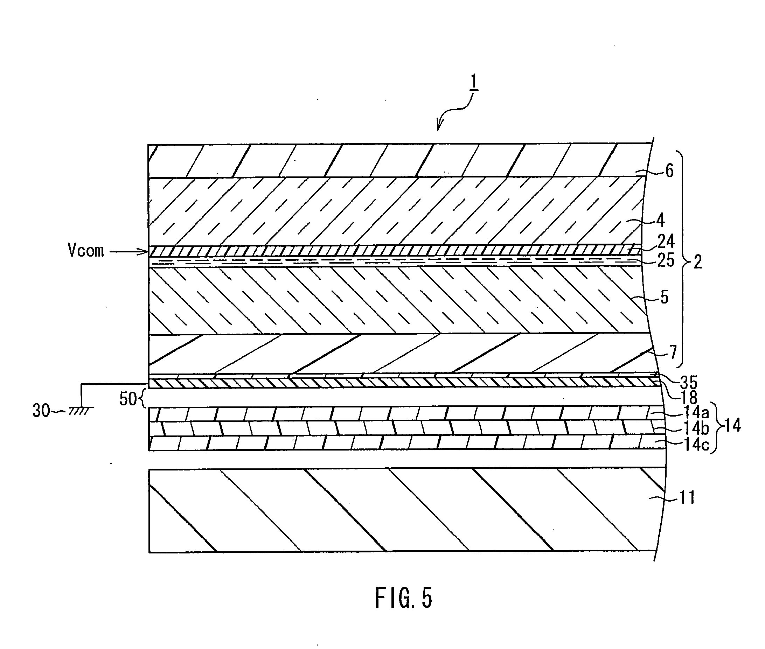

In the above embodiment, as shown in FIG. 4, the back polarizing plate 7 and the transparent conductive sheet 18 are formed in contact with each other. However, as shown in FIG. 5, the back polarizing plate 7 and the transparent conductive sheet 18 may be bonded via an adhesive layer 35.

For example, if the whole liquid crystal display device 10 incorporating the liquid crystal display module 1 vibrates, static electricity can be generated by friction between the back polarizing plate 7 and the transparent conductive sheet 18.

Since the back polarizing plate 7 and the transparent conductive sheet 18 are bonded via the adhesive layer 35, the generation of static electricity between the back polarizing plate 7 and the transparent conductive sheet 18 can be suppressed. Accordingly, vibration of the liquid crystal display panel 2 itself due to a Coulomb force can be suppressed.

### [2. Other embodiments]

Although some embodiments of the present invention have been described above, the present invention is not limited to those embodiments, and various changes may be made within the scope of the present invention. For example, the present invention also can be applied to a liquid crystal display module that includes a liquid crystal display panel having a touch panel function.

### Industrial Applicability

The present invention is useful for a liquid crystal display module that includes a liquid crystal display panel and an optical sheet.

## Claims

1. A liquid crystal display module comprising:
a liquid crystal display panel to which a voltage whose polarity is changed in a predetermined cycle for display driving is applied; and
an optical sheet,
wherein a conductive member is disposed between the liquid crystal display panel and the optical sheet, and connected to a grounding portion.

2. The liquid crystal display module according to claim 1, wherein the conductive member and the optical sheet are placed with a gap therebetween.

3. The liquid crystal display module according to claim 1 or 2, wherein the liquid crystal display panel comprises a front polarizing plate located on a display surface side and a back polarizing plate located on an opposite side to the display surface side, and
the conductive member is formed in contact with the back polarizing plate.

4. The liquid crystal display module according to claim 3, wherein the conductive member and the back polarizing plate are bonded via an adhesive layer.

5. The liquid crystal display module according to any one of claims 1 to 4, wherein the optical sheet is formed by laminating a plurality of optical sheets with different properties.
